# EUROPÄISCHE PATENTSCHRIFT

(11) **EP 1 716 021 B1**
(45) Veröffentlichungstag und Bekanntmachung des Hinweises auf die Patenterteilung: **24.08.2011**
(21) Anmeldenummer: 05714881.9
(22) Anmeldetag: 20.01.2005
(51) Int. Cl.: B60R 21/13, B60J 7/20

(54) **CABRIOLET-FAHRZEUG MIT EINEM BERSCHLAGSCHUTZSYSTEM**
CONVERTIBLE VEHICLE HAVING A ROLLOVER PROTECTION SYSTEM
CABRIOLET A SYSTEME DE PROTECTION CONTRE LE RETOURNEMENT

(30) Priorität: 04.02.2004 DE 102004005591
(43) Veröffentlichungstag der Anmeldung: 02.11.2006
(73) Patentinhaber: Wilhelm Karmann GmbH, 49084 Osnabrück (DE)
(72) Erfinder: RUSSKE, Klaus, 49143 Bissendorf (DE); BUNSMANN, Winfried, 49143 Bissendorf (DE); MEINERT, Stefan, 49134 Wallenhorst (DE)
(74) Vertreter: Kronthaler, Schmidt & Coll.
(86) Internationale Anmeldenummer: PCT/DE2005/000075
(87) Internationale Veröffentlichungsnummer: WO 2005/075257

(56) Entgegenhaltungen:
- DE-A1- 10 059 342
- DE-A1- 10 242 502
- DE-A1- 10 355 332
- DE-A1- 19 639 504

## Beschreibung

Die Erfindung betrifft ein Cabriolet-Fahrzeug mit einem Überschlagschutzsystem, wobei das Überschlagschutzsystem einen festen Überrollbügel enthält, der in einem hinteren Bereich des Fahrzeugs in Fahrtrichtung hinter einem Sitzbereich angeordnet ist, wobei das Fahrzeug eine feste Verdeckabdeckung und/oder eine Heckklappe aufweist.

Aus dem Stand der Technik sind Cabriolet-Fahrzeuge bekannt, die verschiedene Überschlagschutzsysteme aufweisen. Allgemein lassen sich diese Überschlagschutzsysteme in zwei verschiede Arten unterteilen. Zum einen sind dies Systeme, die karosseriefest im Innenraum oder als feste Überrollbügel an das Cabriolet-Fahrzeug angebunden sind. Die andere Art sind in sogenannten aktiven Kassetten integrierte Überroll- bzw. Überschlagschutzsysteme. Dieses Systeme sind in der Regel im Heckbereich hinter dem Sitzbereich des Fahrzeugs angeordnet und funktionieren derart, dass die Überrollbügel bei einem Überschlag des Kraftfahrzeugs automatisch aus ihrer eingefahrenen in eine aktive ausgefahrene Position herausgefahren werden.

Aus dem Stand der Technik sind weiterhin Cabriolet-Fahrzeuge bekannt, die Heckklappen aufweisen, die zu einem Sitzbereich hin oder zu einem Heckbereich hin des Kraftfahrzeugs öffnen. Hierbei dient die Öffnung der Heckklappe zu einem Sitzbereich des Fahrzeugs hin der Ablage des Verdecks des Cabriolet-Fahrzeugs, wohingegen die Öffnung der Heckklappe zum Heck des Fahrzeugs hin der gewöhnlichen Heckklappenfunktion, also zur Nutzung des Kofferraums, dient. Eine gattungsgemäße Heckklappe ist beispielsweise in der DE 44 45 944 C1 offenbart. Hierbei wird die Zweckklappe zusätzlich von einem Hilfsrahmen unterstützt, der in Fahrtrichtung im vorderen Bereich der Heckklappe an die Heckklappe angebunden ist. Der u-förmige Hilfsrahmen erstreckt sich seitlich entlang der Heckklappe bis zum hinteren Bereich der Heckklappe, wo er eine direkte Querverbindung der beiden seitlichen Hilfsrahmenteile aufweist. Der Drehpunkt der Heckklappe zur Nutzung der Kofferraumfunktion befindet sich entsprechend der DE 44 45 944 C1 auf Höhe der Fensterbrüstungslinie hinter dem Sitzbereich des Kraftfahrzeugs, also am - in Fahrtrichtung gesehen - vorderen Ende der Heckklappe.

Bei gattungsgemäßen Cabriolet-Fahrzeugen des Standes der Technik ergibt sich in Fahrzeuglängsrichtung ein erhöhter Platzbedarf dadurch, dass das Überschlagschutzsystem im Bereich hinter dem Sitzbereich des Fahrzeugs und vor der Heckklappe angeordnet ist.

Aus der DE 100 59 342 A1 ist weiter bekannt, ein insgesamt kuppelförmiges hinteres Dachteil, das beweglich an einen Heckdeckel angehängt ist, insgesamt als Überrollbügel auszugestalten. Damit wird jedoch zum Einschwenken des Dachteils ein großer Raum in Fahrtrichtung vor dem Heckdeckel benötigt; dieser muß zudem weit öffnen. Außerdem ist der Dachteil nur durch die relativ dünnen Gestängeteile an den Heckdeckel angebunden, so daß es erschwert ist, einen stabilen und schweren Überrollschutz hier vorzusehen.

Der Erfindung liegt das Problem zugrunde, eine stabile und gleichzeitig raumsparende Anordnung eines beweglichen Überrollbügels zu ermöglichen.

Die Erfindung löst dieses Problem durch ein Cabriolet-Fahrzeug mit den Merkmalen des Anspruchs 1. Hinsichtlich vorteilhafter Ausgestaltungen und Weiterbildungen der Erfindung wird auf die weiteren Ansprüche 2 bis 13 verwiesen.

Durch die Ausbildung nach Anspruch 1 ist es nicht erforderlich, vor dem Heckdeckel oder vor dem hintersten Dachteil einen separaten Bewegungsraum für den überrollschutz zur Verfügung zu stellen. Es ergibt sich somit ein verringerter Platzbedarf. Der Überrollschutz muß zudem auch keine Relativbewegung ausführen und kann stabil als Bestandteil der Kinematik oder fest mit dieser verbunden bei der Dachöffnung mit dieser bewegt werden.

Die Kinematik der Heckklappe ermöglicht dabei sowohl eine Öffnung der Heckklappe zum Sitzbereich des Fahrzeugs hin als auch eine Öffnung der Heckklappe zu einem Heckbereich hin, wobei der Überrollbügel fest mit der Kinematik verbunden oder Bestandteil der Kinematik ist. Durch die feste Verbindung des Überrollbügels mit der Kinematik bzw. dadurch, dass der Überrollbügel Bestandteil der Kinematik list, ist der Überrollbügel indirekt mit der Heckklappe verbunden, die von der Kinematik bewegt wird. Der vorteil, dass der Überrollbügel integraler Bestandteil der Kinematik ist, liegt darin, dass sich auf diese Weise der Platzbedarf weiter verringert. Zusätzlich kann die Anzahl der Komponenten reduziert werden, was sich durch eine Kostenersparnis auswirkt. Die Kinematik in verbindung mit dem Überrollbügel stellt für die Funktion des Heckdeckels eine Art Hilfsrahmen dar.

Bevorzugt weist die Verdeckabdeckung und/oder die Heckklappe sogenannte Finnen auf. Bei Finnen handelt es sich um seitliche Erhöhungen der Karosserie im hinteren Bereich des Kraftfahrzeugs, die wie eine Art Flossen die Heckklappe und/oder die Verdeckabdeckung zu den Karosserieaußenseiten hin begrenzen. Die Finnen weisen in der Regel in Bereich der Heckscheibe ihren höchsten Punkt auf und fallen bis zum Ende des Fahrzeughecks kontinuierlich ab. Ein gattungsgemäßes Kraftfahrzeug, das entsprechende Finnen aufweist, ist beispielsweise in der DE 199 63 149 A1 offenbart. Im Gegensatz zum Finnenverdeck entsprechend der DE 199 63 149 A1 sind entsprechend der vorliegenden Erfindung die Finnen integraler Bestandteil der Verdeckabdeckung und/oder der Heckklappe und können nicht separat bewegt werden. Die Finnen und die Verdeckabdeckung und/oder die Heckklappe sind hierbei einstückig aus dem selben Material gefertigt. Besonders vorteilhaft kann der Überrollbügel in die sogenannten Finnen integriert werden und sich über die gesamte Breite des Fahrzeug erstrecken. Im Bereich zwischen den Finnen verläuft der Überrollbügel unterhalb der Verdeckabdeckung und/oder der Heckklappe.

Ein wesentlicher Vorteil des Finnenverdecks liegt auch darin, daß der Verlauf des Daches des Cabriolet-Fahrzeugs im oberen Bereich der Finnen bzw. der integrierten Überrollbügel endet. Dies führt zu einer limousinenähnlichen Kopffreiheit im Bereich der hinteren Sitzbank des Cabriolet-Fahrzeugs.

Vorteilhaft ist die Heckklappe in einem oberen Bereich der Finnen gelenkig an das Fahrzeug angebunden. Durch diese erfindungsgemäße Anbindung der Heckklappe ergibt sich ein besonders hoher Drehpunkt der Heckklappe, der damit deutlich oberhalb der Fensterbrüstungslinie liegt. Diese hohe Drehpunkt hat wiederum zur Folge, daß die Heckklappe - bei Verwendung als Kofferraumfunktion - eine besonders hohe Kopffreiheit für den Nutzer bietet, der von hinten an das Fahrzeug mit der geöffneten Heckklappe herantritt. Entsprechend der Erfindung kann die gelenkige Anbindung bevorzugt an dem ÜberroLlbügel erfolgen, was wiederum zu einer Verringerung des Platzbedarfes führt. Bevorzugt wird der Öffnungsvorgang der Heckklappe durch eine Gasfeder unterstützt, die in besonders vorteilhafter Weise in die seitlichen Finnen integriert werden kann. Hierbei bleibt es dem Fachmann überlassen nur eine Gasfeder zu verwenden oder je Fahrzeugseite eine Gasfeder vorzusehen. Im Fall eines aktiv angetriebenen Heckdeckels können an Stelle der Gasfedern auch aktive längenveränderliche Stellelemente, wie zum Beispiel hydraulisch oder elektrisch angetriebene Antriebe, zum Einsatz gelangen.

Die bevorzugte erfindungsgemäße Weiterbildung der Kinematik sieht vor, daß diese bei der Öffnung der Heckklappe zu einem Heckbereich hin ortsfest innerhalb des Fahrzeugs verbleibt und bei der Öffnung der Heckklappe zum Sitzbereich des Fahrzeugs hin gemeinsarn mit der Heckklappe aufschwenkt. Hierdurch ergibt sich bei der Nutzung der Heckklappe als Kofferraumfunktion eine besonders "schlanke Kinematik", die eine gute Zugänglichkeit des Kofferraums ermöglicht und zudem optische Vorteile bietet. Bevorzugt ist die Kinematik so ausgestaltet, daß bei der Öffnung der Heckklappe zum Sitzbereich des Fahrzeugs hin zunächst eine Anhebung der Heckklappe erfolgt und im Anschluß eine Schwenkbewegung der Heckklappe einsetzt. Zur Anhebung der Kinematik ist erfindungsgemäß vorgesehen, daß im Heckbereich des Fahrzeugs eine Hydraulikeinheit integriert ist, die einen hinteren Anbindungspunkt der Kinematik in seiner vertikalen Position anheben kann. Alternativ kann eine andere aktive Antriebseinheit vorgesehen sein, wie beispielsweise ein elektrischer Antrieb. Durch diese Maßnahme wird in besonders vorteilhafter Weise erreicht, daß die Heckklappe während der Aufschwenkbewegung an dem hinteren Ende nicht mit anderen Teilen der Fahrzeugkarosserie kollidiert. Zugleich kann der hintere Anbindungspunkt der Heckklappe ein einfacher Drehpunkt sein und es kann auf eine aufwendige Kinematik bzw. einen schwanenhalsähnlichen Gelenkmechanismus zur Schwenkbewegung der Heckklappe verzichtet werden.

Erfindungsgemäß besteht die Kinematik aus zwei seitlichen Hilfsrahmenelementen, die durch den Überrollbügel miteinander verbunden sind. Durch diese Integration des Überrollbügels zwischen die Hilfsrahmenelemente - als gemeinsames Modul im Rahmen dieser Erfindung als Kinematik für die Verdeckabdeckung und/oder die Heckklappe bezeichnet - wird wiederum Bauraum eingespart, wodurch mehr Platz für den Innenraum des Kraftfahrzeugs zur Verfügung steht.

Eine bevorzugte Weiterbildung des erfindungsgemäßen Cabriolet-Fahrzeugs sieht vor, daß die Kinematik und/oder die Heckklappe und/oder die Verdeckabdeckung wenigstens ein Verriegelungszapfen aufweist, mit dem die Kinematik und/oder die Heckklappe und/oder die Verdeckabdeckung am Fahrzeug festlegbar ist. Dies hat den besonders großen Vorteil, daß der mit diesen Elementen verbundene Überrollbügel ebenfalls indirekt am Fahrzeug festgelegt werden kann. Dies führt zu einer besonders festen Verbindung des Überrollbügels mit dem Fahrzeug. Es können je nach Auslegung des Cabriolet-Fahrzeugs ein oder zwei Verriegelungszapfen vorgesehen sein. Zur Verriegelung der Verriegelungszapfen innerhalb der Karosserie wird auf dem Fachmann bekannte Verschlußsysteme verwiesen.

Erfindungsgemäß weist das Fahrzeug ein aus wenigstens einer festen Platte bestehendes Dach auf, welches von einer den Sitzbereich überdeckenden Stellung in eine im hinteren Bereich des Fahrzeugs abgelegte Stellung verlagerbar ist. Vorteilhaft ist eine Heckscheibe des Kraftfahrzeugs integraler Bestandteil der hinteren festen Platte. Hierdurch wird der Platzbedarf für das gesamte Verdecksystem weiter verringert. Vorteilhaft weist die Heckscheibe eine nahezu vertikale Ausrichtung auf, so daß sowohl bei geöffneten als auch bei abgelegten Verdeck in besonders vorteilhafter Weise auf eine sogenannte Hutablage verzichtet werden kann. Unter einer Hutablage versteht man im allgemeinen Fall eine Abdeckung, die den Bereich hinter der hinteren Sitzbank des Fonds und der sich anschließenden Verdeckabdeckung bzw. der Heckklappe überbrückt. Durch die erfindungsgemäße nahezu vertikale Ausrichtung der Heckscheibe ist an diesem Punkt nahezu kein Spalt vorhanden, wodurch auf eine Hutablage verzichtet werden kann.

Weitere vorteilhafte Ausgestaltungen des erfindungsgemäßen Cabriolet-Fahrzeugs ergeben sich aus der nachfolgenden Beschreibung eines Ausführungsbeispiels.
Fig. 1 zeigt ein erfindungsgemäßes Cabriolet-Fahrzeug mit geschlossenem Dach und geschlossenem Heckdeckel,
Fig. 2 zeigt ein erfindungsgemäßes Fahrzeug mit einem geöffnetem Heckdeckel und dargestelltem Hilfsrahmen,
Fig. 3 zeigt ein erfindungsgemäßes Kraftfahrzeug mit einem zur Verdeckablage geöffneten Heckdeckel,
Fig. 4 zeigt ein erfindungsgemäßes Cabriolet-Fahrzeug mit einem geöffneten Dach, wobei die Dachelemente schematisch in ihrer Position im hinteren Bereich des Kraftfahrzeugs dargestellt sind und
Fig. 5 zeigt schematisch verschiedene Stellungen des erfindungsgemäßen Cabriolet-Fahrzeugs.

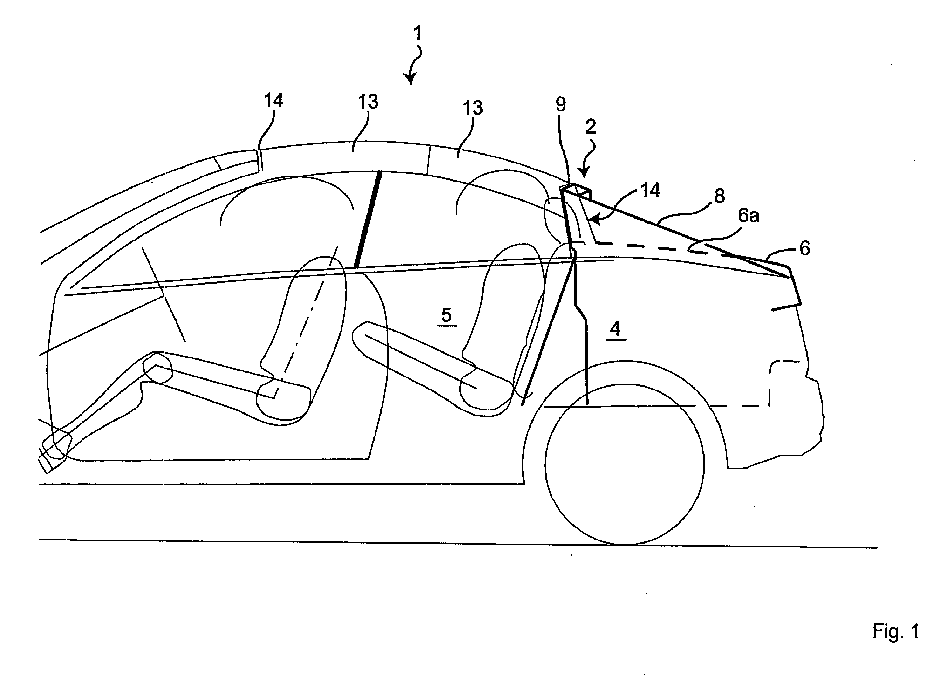

Fig. 1 zeigt ein erfindungsgemäßes Cabriolet-Fahrzeug 1, mit geschlossenem Dach und geschlossenem Heckdeckel 6. Das Kraftfahrzeug ist mit einem Überschlagschutzsystem 2 ausgestattet, das in diesem Ausführungsbeispiel in die Finnen 8 integriert ist. Das Überschlagschutzsystem 2 ist in einem Bereich zwischen dem Sitzbereich 5 des Fahrzeugs und dem hinteren Bereich 4 des Fahrzeugs angeordnet. Das Verdeck des Fahrzeugs besteht in diesem Ausführungsbeispiel aus zwei festen Dachplatten 13, die sich von einem Windschutzscheibenrahmen 14 bis zum Überschlagschutzsystem 2 erstrecken. Die beiden Dachplatten 13 sind miteinander durch eine geeignete Kinematik verbunden. Integraler Bestandteil der hinteren festen Dachplatte 13 ist hierbei das Heckscheibenelement 14, das nahezu vertikal ausgerichtet ist. Die Finnen 8 sind in diesem Ausführungsbeispiel integraler Bestandteil des Heckdeckels 6. Mit anderen Worten, die Finnen und die Heckklappe 6 sind einstückig aus dem selben Material hergestellt. Die beiden Dachplatten 13 sind gemeinsam mit einer geeigneten Kinematik versehen mittels der die Dachplatten 13 aus Ihrer den Sitzbereich 5 überdeckenden Stellung in den hinteren Bereich 4 des Fahrzeugs 1 abgelegt werden können. In Figur 1 ist der in Seitenansicht nicht erkennbare Verlauf 6a des Heckdeckels 6 strichliniert dargestellt. Dieser Verlauf 6a zeigt die Kontur des Heckdeckels 6 in Fahrzeugmitte zwischen den seitlichen Finnen 8. Aus Figur 1 ist ein wesentlicher Vorteil der Erfindung erkennbar: Durch die besonders platzsparende Integration des Überrollbügels in den Heckdeckel in Kombination mit den ebenfalls in den Heckdeckel integrierten Finnen ist selbst bei einem insgesamt sehr kurzen Kraftfahrzeug eine hintere Sitzreihe mit ausreichender Kopffreiheit darstellbar. Die Anordnung des Überrollbügels unterhalb der Finnen, wodurch der Überrollbügel nicht sichtbar ist, ermöglicht die Verwendung eines kostengünstigen starren Systems. Es kann also mit Blick auf sonst vorherrschende optische Erwägungen auf eine teure aktive Kassettenlösung für das Überschlagschutzsystem verzichtet werden.

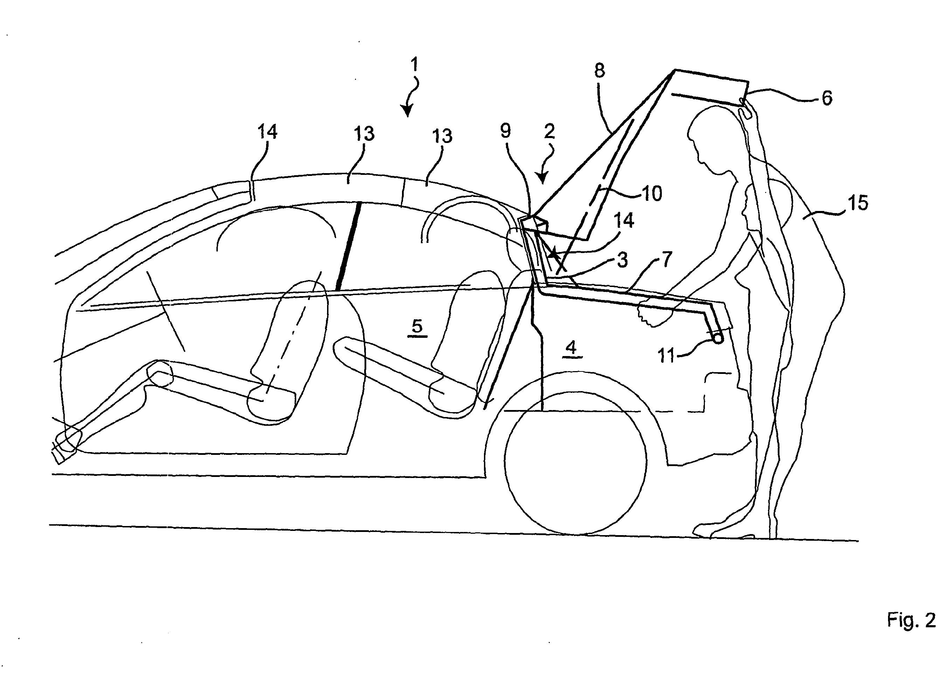

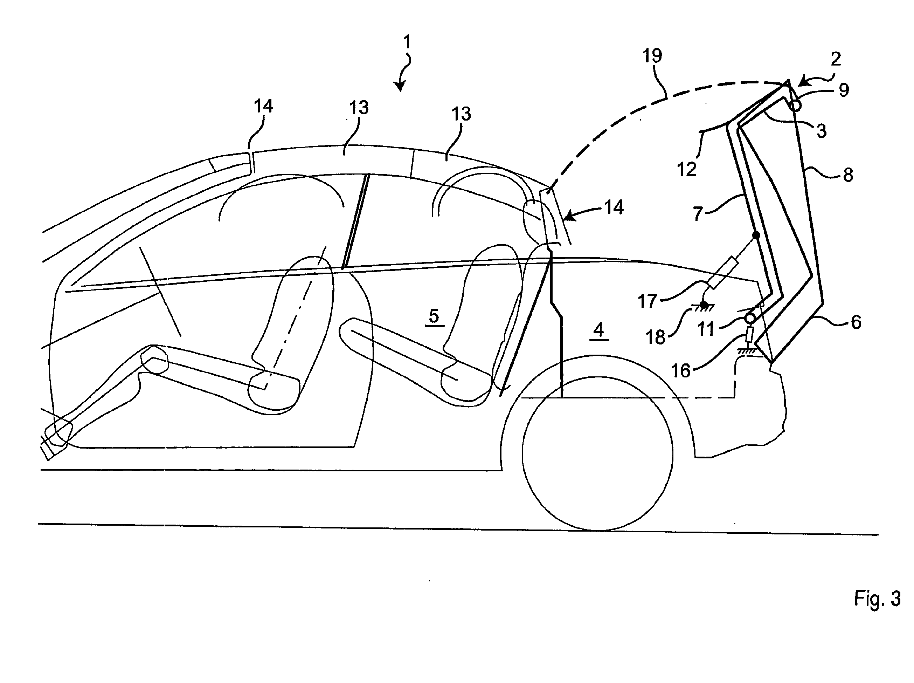

Fig. 2 zeigt das erfindungsgemäße Kraftfahrzeug mit einem zur Nutzung des Kofferraums geöffneten Heckklappe. 6. Die Heckklappe wird beim Öffnungsvorgang durch eine Gasfeder 10 unterstützt und ist im oberen Bereich 9 der Finnen gelenkig an das Fahrzeug angebunden. Wie vorstehend bereits erläutert sind alternative Antriebe einsetzbar. Entsprechend einer bevorzugten Ausgestaltung des erfindungsgemäßen Kraftfahrzeugs erfolgt die Anbindung im oberen Bereich 9 der Finnen 8 unmittelbar an den Überrollbügel 3 des Überschlagschutzsystems 2. Der Überrollbügel 3 steht in unmittelbarer bzw. direkter Verbindung mit der Kinematik 7, welche bei dieser Funktion der Heckklappe 6 zur Nutzung des Kofferraums ortsfest in seiner Position innerhalb der Karosserie des Fahrzeugs verbleibt. Hierzu ist das Modul aus Überrollbügel 3 und Kinematik 7 mit einem Verriegelungsbolzen 12, der in dieser Figur nicht gezeigt ist (siehe Figur 3), fest mit der Karosserie verbunden. Das Modul aus Überrollbügel 3 und Kinematik 7 stellt für die Funktion des Heckdeckels 6 eine Art Hilfsrahmen dar.

Durch die Anbindung der Heckklappe 6 im oberen Bereich 9 der Finnen 8 ergibt sich ein sehr hoher Drehpunkt der Heckklappe 6, was zu einer sehr hohen Kopffreiheit für den Nutzer 15 des Kofferraums führt. Dies ist insbesondere bei kurzen Heckklappen von großem Vorteil, da sich diese bei Öffnung nicht sehr weit in vertikaler Richtung erstrecken.

In Fig. 2 ist zudem ein hinterer Anbindungspunkt 11 der Kinematik 7 gezeigt, der für die Funktion des Heckdeckels 6 zur Verdeckablage benötigt wird. Der Anbindungspunkt 11 stellt einen Drehpunkt für das aus Kinematik 7 und Überrollbügel 3 bestehende Hilfsrahmenmodul dar. Die weitere Funktion dieses Drehpunktes 11 wird in den nachfolgenden Figuren erläutert.

Fig. 3 zeigt die Heckklappe 6 in einer zur Verdeckablage bestimmten geöffneten Stellung. Um diese Position zu erreichen, wird die Einheit aus Kinematik 7 und Überrollbügel 3 zunächst mit ihrem Verriegelungszapfen 12 von der Karosserie des Fahrzeugs abgelöst. In einem zweiten Schritt wird der hintere Drehpunkt 11 der Kinmatik 7 durch einen schematisch dargestellten Hydraulikzylinder 16 leicht angehoben. Auch hier liegen alternative Antriebe, wie zum Beispiel ein elektromotorischer Antrieb im Rahmen der Erfindung. Im Anschluß wird die Schwenkbewegung der Heckklappe durch einen schematisch dargestellten Hydraulikzylinder 17 eingeleitet, der beispielsweise zwischen einer karosseriefesten Anbindung 18 und der Kinematik 7 eingesetzt sein kann. Auch hier sind beliebige andere Antriebe, bevorzugt elektromotorische Antriebe - auch mit alternativen Anbinsungspunkten - möglich und liegen im Rahmen der Erfindung. Während des Aufschwenkens durchläuft der Heckdeckel 6 die mit 19 bezeichnete strichlinierte Bewegungsbahn. Die in der Darstellung nach Fig. 3 nur schematisch gezeigten Hydraulikzylinder 16 und 17 können vom Fachmann entsprechend des hier der jeweiligen Bedürfnisse des jeweiligen Cabriolet-Fahrzeugs ausgelegt werden. Es liegt im Rahmen des erfindungsgemäßen Cabriolet-Fahrzeugs, andere Mechanismen zur Anhebung des hinteren Anbindungspunktes 11 der Kinematik 7 bzw. zur Einleitung einer Kraft in den Hilfsrahmen 7 zu verwenden.

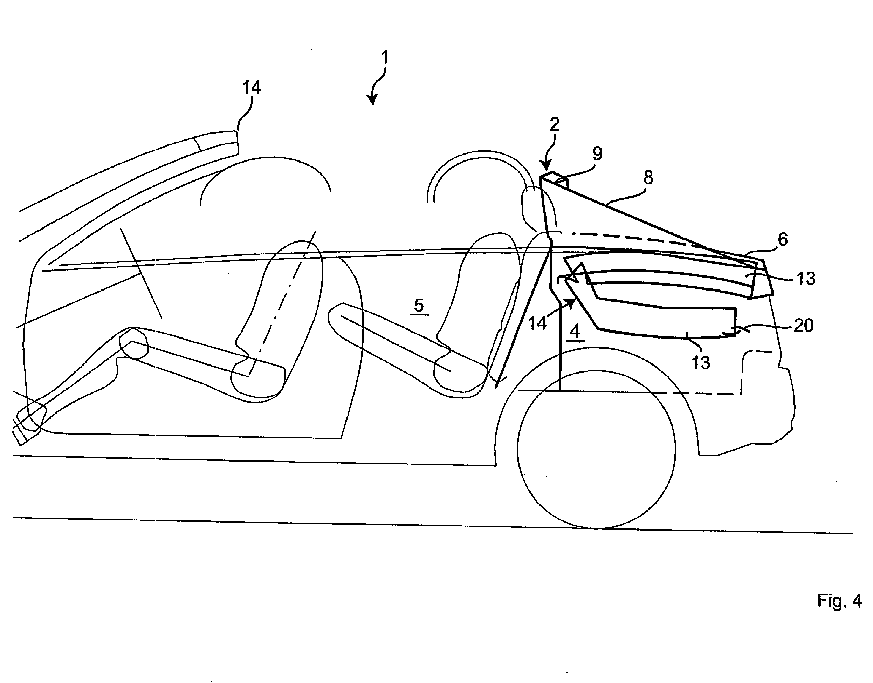

Im Anschluß an die Öffnung des Heckdeckels 6 in die in Figur 3 gezeigte Position kann die Ablage der Dachteile 13 mit der integrierten Heckscheibe 14 erfolgen. Die Ablage erfolgt durch eine geeignete Kinematik, die hier nicht gezeigt ist. Die Kinematik ist hierbei nicht auf die in Figur 4 gezeigte gegensinnige Ablageposition der Dachplatten 13 beschränkt. Alternative insbesondere gleichsinnige Ablagepositionen liegen im Rahmen der Erfindung. Eine weitere Alternative der Erfindung besteht darin, dass die Heckscheibe 14 nicht integraler Bestandteil der hinteren Dachplatte 13 ist, sondern separat angeordnet ist. In diesem Fall ist zum Beispiel vorteilhaft, wenn die Heckscheibe in nicht gezeigtes Heckscheibenmodul nahezu senkrecht abgesenkt werden kann. Dies ermöglicht ein Absenken der Heckscheibe während der Fahrt wie auch ein Hochfahren der Heckscheibe bei abgelegtem Dach, beispielsweise als Windschutz.

Fig. 4 zeigt den geöffneten Zustand des erfindungsgemäßen Cabriolet-Fahrzeugs, bei dem die festen Platten 13 mitsamt der integrierten Heckscheibe 14 im hinteren Bereich 4 des Cabriolet-Fahrzeugs abgelegt sind. In dieser abgelegten Stellung sind im Bereich der vorderen festen Platte 13 Verriegelungsbolzen 20 erkennbar, die bei geschlossenem Dach in den Windschutzscheibenrahmen 14 eingreifen und dort eine Verriegelung der festen Dachplatten 13 bewirken.

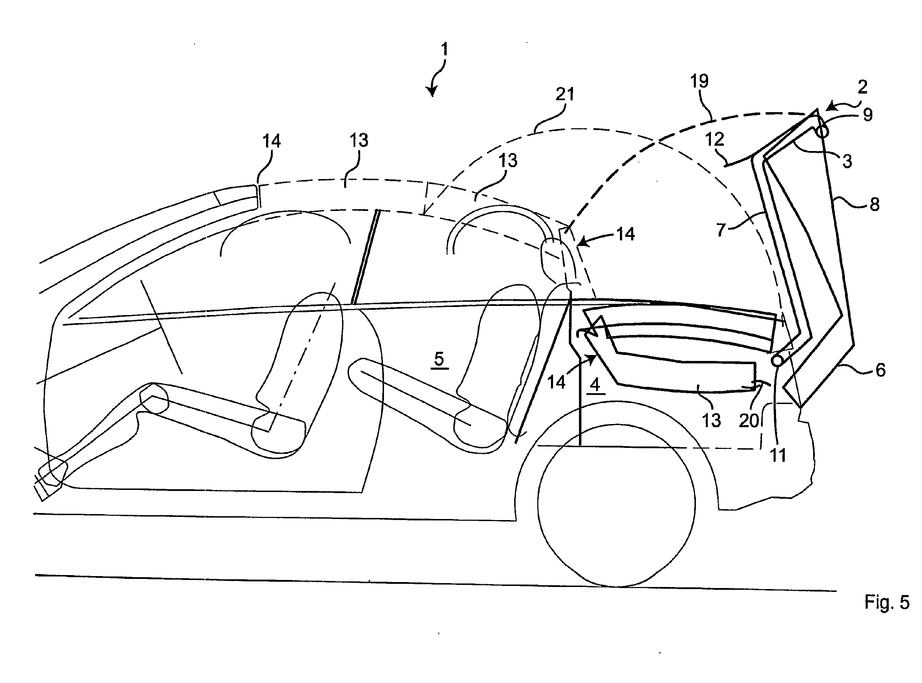

In Fig. 5 ist mit der Strichlinie 21 die Bewegungsbahn eines Punktes der hinteren festen Platte 13 angedeutet. Diese Figur zeigt schematisch sowohl die geschlossene Stellung der festen Dachplatten 13 als auch die im hinteren Bereich 4 des Fahrzeugs abgelegte Stellung der festen Dachplattten 13.

Bei einem Kraftfahrzeug mit einem längeren Heckbereich als in diesem Ausführungsbeispiel gezeigt, kann zusätzlich zu einem Heckdeckel, der in diesem Fall nur eine gewöhnliche Kofferraumfunktion aufweist, ein sogenannter - Heckdeckel in Fahrtrichtung vorgeordnetger - Verdeckkastendeckel vorgesehen sein, der die Funktion der Verdeckabdeckung wahrnimmt. In diesem Fall liegt es im Bereich der Erfindung, daß der Überrollbügel in die Verdeckabdeckung direkt oder indirekt integriert ist. Ebenso wie bei der Integration des Überrollbügels in die Heckklappe ergibt sich entsprechend der Erfindung prinzipiell die Möglichkeit, den Überrollbügel direkt mit der Heckklappe bzw. der Verdeckabdeckung zu verbinden bzw. den Überrollbügel direkt in die Verdeckabdeckung oder die Heckklappe zu integrieren, oder die Möglichkeit, daß der Überrollbügel in die Verdeckabdeckung und/oder die Heckklappe indirekt mittels einer Kinematik integriert ist. Eine solche Kinematik kann auf für die Funktion des Verdeckkastendeckels vorteilhaft sein.

Durch die erfindungsgemäße Verwendung von Finnen im hinteren Bereich des Cabriolet-Fahrzeugs weisen die festen Dachplatten eine Dachlinie auf, die in ihrem hinteren Bereich im oberen Bereich des Überschlagschutzsystems 2 endet. Hierdurch ergibt sich ein sehr hoher Innenraum, der insbesondere im Bereich der hinteren Sitzplätze des Fahrzeugs zu einer großen Kopffreiheit führt.

Es liegt weiterhin im Rahmen des erfindungsgemäßen Cabriolet-Fahrzeugs, daß das Dach aus mehr als zwei oder auch weniger als zwei festen Plattenelementen bestehen kann.

Die seitlichen Hilfsrahmenteile, die die Kinematik 7 bilden und in Verbindung mit dem Überrollbügel 3 eine bauliche Einheit'- eine Art Hilfsrahmen für die Betätigung des Heckdeckels -, stellen in einer virtuellen Draufsicht des Fahrzeugs eine U-förmige Einheit dar, wobei das U in Heckrichtung geöffnet ist. Durch die feste Verbindung des Überrollbügels 3 mit der Kinematik 7 wird bei Öffnung des Heckdeckels 6 zur Verdeckablage das gesamte Überschlagschutzsystem gemeinsam mit dem Heckdeckel 6 aufgeschwenkt. Eine alternative Ausgestaltung sieht vor, daß der Überrollbügel zwar mit der Verdeckabdeckung oder der Heckklappe direkt oder indirekt verbunden ist, von diesen Klappen jedoch nicht bedeckt wird, sondern aus diesen Klappen hervorsteht. Besonders vorteilhaft kommt ein Überrollbügel zum Einsatz, der in die sogenannten Finnen integriert ist, und sich in Fahrzeugquerrichtung über das gesamte Fahrzeug erstreckt. Im Bereich zwischen den seitlichen Finnen verläuft der Überrollbügel in diesem Fall unterhalb des Heckdeckels.

Durch die Trennung des Daches bzw. der Dachplatten 13 an den Finnen 8, die wiederum zur Heckklappe 6 gehören, kann durch eine kurze Heckscheibe die Hutablage eingespart werden.

## Patentansprüche

1. Cabriolet-Fahrzeug (1) mit einem Überschlagschutzsystem (2), wobei das Überschlagschutzsystem (2) einen festen Überrollbügel (3) enthält, der in einem hinteren Bereich (4) des Fahrzeugs in Fahrtrichtung hinter einem Sitzbereich (5) angeordnet ist, wobei das Fahrzeug eine feste Verdeckabdeckung und/oder eine Heckklappe (6) aufweist und der Überrollbügel (3) in die Verdeckabdeckung und/oder die Heckklappe (6) direkt oder indirekt integriert ist,
**dadurch gekennzeichnet,**
**dass** die Heckklappe (6) mit einer Kinematik (7) versehen ist, die sowohl eine Öffnung der Heckklappe zum Sitzbereich (5) des Fahrzeugs hin als auch eine Öffnung der Heckklappe zu einem Heckbereich hin ermöglicht, und dass der Überrollbügel (3) fest mit der Kinematik (7) verbunden oder Bestandteil der Kinematik (7) ist.

2. Cabriolet-Fahrzeug (1) nach Anspruch 1,
**dadurch gekennzeichnet,**
**dass** die Verdeckabdeckung und/oder die Heckklappe (6) Finnen (8) aufweisen.

3. Cabriolet-Fahrzeug (1) nach Anspruch 2,
**dadurch gekennzeichnet,**
**dass** die Heckklappe (6) in einem oberen Bereich (9) der Finnen (8) gelenkig an das Fahrzeug (1) angebunden ist.

4. Cabriolet-Fahrzeug (1) nach Anspruch 3,
**dadurch gekennzeichnet,**
**dass** die gelenkige Anbindung an den Überrollbügel (3) erfolgt.

5. Cabriolet-Fahrzeug (1) Anspruch 3,
**dadurch gekennzeichnet,**
**dass** ein Öffnungsvorgang der Heckklappe durch eine Gasfeder (10) unterstützt wird.

6. Cabriolet-Fahrzeug (1) nach Anspruch 1,
**dadurch gekennzeichnet,**
**dass** die Kinematik (7) bei der Öffnung der Heckklappe (6) zu einem Heckbereich hin ortsfest innerhalb des Fahrzeugs verbleibt und bei der Öffnung der Heckklappe (6) zum Sitzbereich (5) des Fahrzeugs (1) hin gemeinsam mit der Heckklappe (6) aufschwenkt.

7. Cabriolet-Fahrzeug (1) nach Anspruch 1,
**dadurch gekennzeichnet,**
**dass** die Kinematik (7) bei der Öffnung der Heckklappe (6) zum Sitzbereich (5) des Fahrzeugs (1) hin zunächst eine Anhebung der Heckklappe (6) bewirkt und im Anschluss eine Schwenkbewegung der Heckklappe (6) erfolgt.

8. Cabriolet-Fahrzeug (1) nach Anspruch 7,
**dadurch gekennzeichnet,**
**dass** im Heckbereich des Fahrzeugs (1) eine Hydraulikeinheit vorgesehen ist, die einen hinteren Anbindungspunkt (11) der Kinematik (7) in seiner vertikalen Position anheben kann.

9. Cabriolet-Fahrzeug (1) nach Anspruch 1,
**dadurch gekennzeichnet**
**dass** die Kinematik (7) aus zwei seitlichen Hilfsrahmenelementen besteht, die durch den Überrollbügel (3) miteinander verbunden sind.

10. Cabriolet-Fahrzeug (1) nach Anspruch 1,
**dadurch gekennzeichnet,**
**dass** die Kinematik (7) und/oder die Heckklappe (6) und/oder die Verdeckabdeckung einen Verriegelungszap-fen (12) aufweist, mit dem die Kinematik (7) und/oder die Verdeckabdeckung am Fahrzeug (1) festlegbar ist.

11. Cabriolet-Fahrzeug (1) nach einem der vorhergehenden Ansprüche,
**dadurch gekennzeichnet,**
**dass** das Fahrzeug (1) ein aus wenigstens einer festen Platte (13) bestehendes Dach aufweist, welches von einer den Sitzbereich (5) überdeckenden Stellung in eine im hinteren Bereich (4) des Fahrzeugs (1) abgelegte Stellung verlagerbar ist.

12. Cabriolet-Fahrzeug (1) nach Anspruch 11,
**dadurch gekennzeichnet,**
**dass** eine Heckscheibe (14) Bestandteil der hinteren festen Platte (13) ist.

13. Cabriolet-Fahrzeug (1) nach Anspruch 12,
**dadurch gekennzeichnet,**
**dass** die Heckscheibe (14) eine nahezu vertikale Ausrichtung aufweist.

## Claims

1. Cabriolet vehicle (1) with a rollover protection system (2), wherein the rollover protection system (2) contains a fixed roll bar (3), which is arranged in a rear region (4) of the vehicle in the direction of travel behind a seat area (5), wherein the vehicle has a fixed top cover and/or a rear flap (6) and the roll bar (3) is integrated directly or indirectly into the top cover and/or the rear flap (6),
**characterized in that**
the rear flap (6) is provided with kinematics (7), which makes possible both an opening of the rear flap towards the seat area (5) of the vehicle and also an opening of the rear flap towards a rear area, and that the roll bar (3) is fixedly connected with the kinematics (7) or is a component of the kinematics (7).

2. Cabriolet vehicle (1) according to Claim 1,
**characterized in that**
the top cover and/or the rear flap (6) have fins (8).

3. Cabriolet vehicle (1) according to Claim 2,
**characterized in that**
the rear flap (6) is connected articulatedly to the vehicle (1) in an upper region (9) of the fins (8).

4. Cabriolet vehicle (1) according to Claim 3,
**characterized in that**
the articulated connection takes place to the roll bar (3).

5. Cabriolet vehicle (1) according to Claim 3,
**characterized in that**
an opening process of the rear flap is assisted by a gas spring (10).

6. Cabriolet vehicle (1) according to Claim 1,
**characterized in that**
the kinematics (7) remains stationary inside the vehicle, during the opening of the rear flap (6) towards a rear region, and swings open together with the rear flap (6) during the opening of the rear flap (6) towards the seat area (5) of the vehicle (1).

7. Cabriolet vehicle (1) according to Claim 1,
**characterized in that**
the kinematics (7) initially causes a raising of the rear flap (6) during the opening of the rear flap (6) towards the seat area (5) of the vehicle (1), and subsequently a pivoting movement of the rear flap (6) takes place.

8. Cabriolet vehicle (1) according to Claim 7,
**characterized in that**
in the rear region of the vehicle (1) a hydraulic unit is provided, which can raise a rear connecting point (11) of the kinematics (7) in its vertical position.

9. Cabriolet vehicle (1) according to Claim 1,
**characterized in that**
the kinematics (7) consists of two lateral subframe elements, which are connected with each other through the roll bar (3).

10. Cabriolet vehicle (1) according to Claim 1,
**characterized in that**
the kinematics (7) and/or the rear flap (6) and/or the top cover has a locking pin (12), by which the kinematics (7) and/or the top cover is able to be secured on the vehicle (1).

11. Cabriolet vehicle (1) according to one of the preceding claims,
**characterized in that**
the vehicle (1) has a roof consisting of at least one fixed sheet (13), said roof being able to be displaced from a position covering the seat area (5) into a stored position in the rear area (4) of the vehicle (1).

12. Cabriolet vehicle (1) according to Claim 11,
**characterized in that**
a rear window (14) is a component part of the rear fixed sheet (13).

13. Cabriolet vehicle (1) according to Claim 12,
**characterized in that**
the rear window (14) has an almost vertical alignment.

## Revendications

1. Cabriolet (1) doté d'un système anticapotage (2), le système anticapotage (2) contenant un arceau de sécurité (3) fixe, qui est disposé dans une zone (4) arrière du véhicule dans le sens de marche derrière une zone de sièges (5), le véhicule présentant un revêtement de capote fixe et/ou un hayon (6) et l'arceau de sécurité (3) étant intégré directement ou indirectement dans le revêtement de capote et/ou le hayon (6),
**caractérisé**
**en ce que** le hayon (6) est doté d'une partie cinématique (7), qui permet aussi bien une ouverture du hayon en direction de la zone de sièges (5) du véhicule qu'une ouverture du hayon en direction d'une zone arrière, et en ce que l'arceau de sécurité (3) est relié fixement à la cinématique (7) ou est un élément intégré de la partie cinématique (7).

2. Cabriolet (1) selon la revendication 1,
**caractérisé**
**en ce que** le revêtement de capote et/ou le hayon (6) présentent des parties effilées (8).

3. Cabriolet (1) selon la revendication 2,
**caractérisé**
**en ce que** le hayon (6) est rattaché de façon articulée au véhicule (1) dans une zone (9) supérieure des parties effilées (8).

4. Cabriolet (1) selon la revendication 3,
**caractérisé**
**en ce que** le rattachement articulé s'effectue sur l'arceau de sécurité (3).

5. Cabriolet (1) selon la revendication 3,
**caractérisé**
**en ce qu'**un processus d'ouverture du hayon est assisté par une cartouche à gaz (10).

6. Cabriolet (1) selon la revendication 1,
**caractérisé**
**en ce que** la partie cinématique (7) reste fixe à l'intérieur du véhicule lors de l'ouverture du hayon (6) en direction d'une zone arrière et bascule vers le haut conjointement avec le hayon (6) lors de l'ouverture du hayon (6) en direction de la zone de sièges (5) du véhicule (1).

7. Cabriolet (1) selon la revendication 1,
**caractérisé**
**en ce que** la partie cinématique (7) entraîne d'abord un soulèvement du hayon (6) lors de l'ouverture du hayon (6) en direction de la zone de siège (5) du véhicule (1) et un mouvement de basculement du hayon (6) intervient ensuite.

8. Cabriolet (1) selon la revendication 7,
**caractérisé**
**en ce qu'**il est prévu dans la zone arrière du véhicule (1) une unité d'hydraulique qui peut soulever un point de rattachement (11) arrière de la partie cinématique (7) dans sa position verticale.

9. Cabriolet (1) selon la revendication 1,
**caractérisé**
**en ce que** la partie cinématique (7) est constituée de deux éléments latéraux de cadre auxiliaire, qui sont reliés l'un à l'autre par l'arceau de sécurité (3).

10. Cabriolet (1) selon la revendication 1,
**caractérisé**
**en ce que** la partie cinématique (7) et/ou le hayon (6) et/ou le revêtement de capote présente(nt) un ergot de verrouillage (12), avec lequel la partie cinématique (7) et/ou le revêtement de capote peu(vent)t être fixé(s) sur le véhicule (1).

11. Cabriolet (1) selon l'une quelconque des revendications précédentes,
**caractérisé**
**en ce que** le véhicule (1) présente un toit constitué d'au moins une plaque (13) fixe, qui peut être déplacé d'une position recouvrant la zone de sièges (5) dans une position déposée dans la zone (4) arrière du véhicule (1).

12. Cabriolet (1) selon la revendication 11,
**caractérisé**
**en ce qu'**une vitre arrière (14) fait partie de la plaque (13) fixe arrière.

13. Cabriolet (1) selon la revendication 12,
**caractérisé**
**en ce que** la vitre arrière (14) présente une orientation pratiquement verticale.
